# EUROPEAN PATENT APPLICATION

(11) **EP 3 170 400 A1**
(43) Date of publication of application: **24.05.2017**
(21) Application number: 15195196.9
(22) Date of filing: 18.11.2015
(51) Int. Cl.: A23G 9/04, A23G 9/06, A23G 9/22, A23G 9/28

(54) **APPARATUS FOR INSTANT MAKING OF FROZEN FOODS, SUCH AS ICE CREAMS OR THE LIKE**

(71) Applicant: Azotech S.r.l., 38020 Cloz (TN) (IT)
(72) Inventor: BOLZONI, Luca, 38020 Cloz (TN) (IT); CAPPELLIN, Luca, 38020 Cloz (TN) (IT); CAVALLI, Tiziana Laura, 38020 Cloz (TN) (IT)
(74) Representative: Fiorentino, Luca

(57) **Abstract**

An apparatus (1) for making a frozen food, such as ice cream or the like, comprises:
- a mixing chamber (9) for mixing one or more ingredients together and/or with air;
- a frozen food forming chamber (16) connected to said mixing chamber (9) and to an apparatus outlet (6);
- means (21',21",22) for moving the mixture coming from the mixing chamber (9) along a path in the frozen food forming chamber (16) towards the apparatus outlet (6);
- a freezing circuit for freezing the mixture along said path in the frozen food forming chamber (16), said freezing circuit comprising a freezing fluid reservoir (24) for storing a freezing fluid and a freezing chamber (25) connected to said freezing fluid reservoir (24) suitable to collect a predetermined amount of the freezing fluid coming from the freezing fluid reservoir (24).

Said freezing chamber (25) is in a heat exchange relationship with and fluidically closed to the frozen food forming chamber (16), such that the freezing fluid in the freezing chamber (25) freezes the mixture in the frozen food forming chamber (16) without entering in contact with said mixture.

## Description

### BACKGROUND

### Technical field

The present invention relates to an apparatus for instant making of frozen foods, such as traditional ice-creams, soft ice-creams, soy-based ice-creams, sherbets, frozen yogurts, milkshakes or the like.

### Description of the Related Art

Apparatuses for making frozen foods are known in the art. With particular reference to the field of apparatuses for instant making of ice-creams, it is known and much appreciated to make ice-creams by direct mixing liquid nitrogen with the mixture of ingredients. The direct contact of liquid nitrogen at a temperature which is less than -150° C causes the ingredients to freeze almost instantaneously (indicatively in less than a minute), thereby obtaining an "instant" ice cream with particular organoleptic properties, in particular having ice crystals smaller than a traditional ice-cream, which makes the ice-cream particularly tasty. When the liquid nitrogen enters in contact with the ingredients it evaporates.

Such way of making ice creams can be performed either manually or automatically by particular ice-cream making machines.

A drawback associated to these known machines is the consumption of the vaporized nitrogen, which is lost after freezing the food.

Another drawback of these known machines is the non-uniform freezing of the food when liquid nitrogen is put in contact with the mixture of ingredients.

### BRIEF SUMMARY OF THE INVENTION

The object of the present invention is therefore to provide an apparatus for "instant" making of frozen foods, such as ice-creams or the like, allowing a sufficiently low consumption of freezing fluid, such as nitrogen, and an adequately uniform freezing of the ingredients.

This and other objects are achieved by an apparatus for making frozen foods, such as ice creams or the like, according to claim 1.

Dependent claims define possible advantageous embodiments of the invention.

### BRIEF DESCRIPTION OF THE DRAWINGS

Further characteristics and advantages of the apparatus according to the invention will be more apparent from the following description of a preferred embodiment and of its alternatives given as a way of an example with reference to the enclosed drawings in which:
Figure 1 shows a schematic perspective view of an apparatus for instant making of frozen foods according to a possible embodiment of invention;

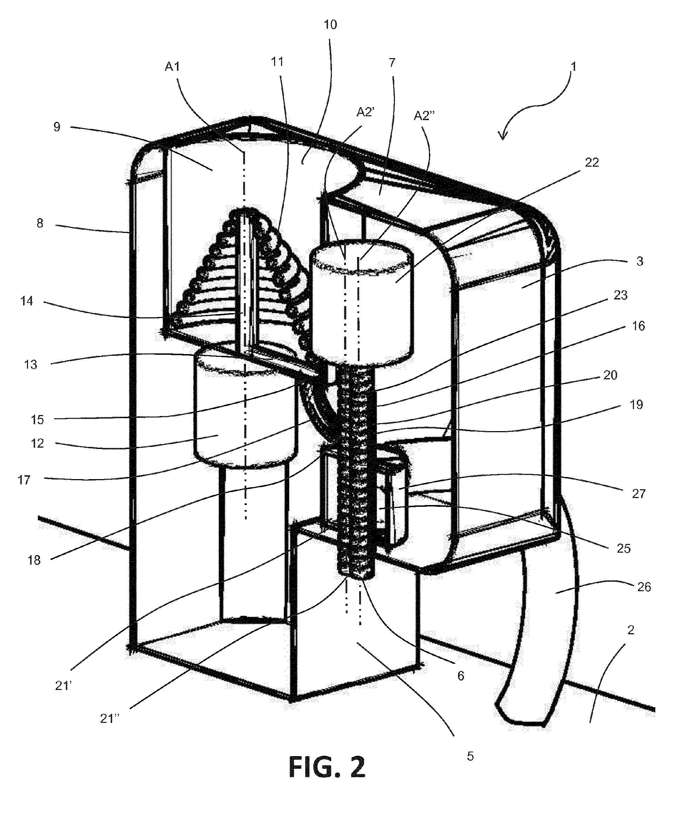

Figure 2 shows an enlarged sectional view of a portion of the apparatus in Figure 1.

### DETAILED DESCRIPTION

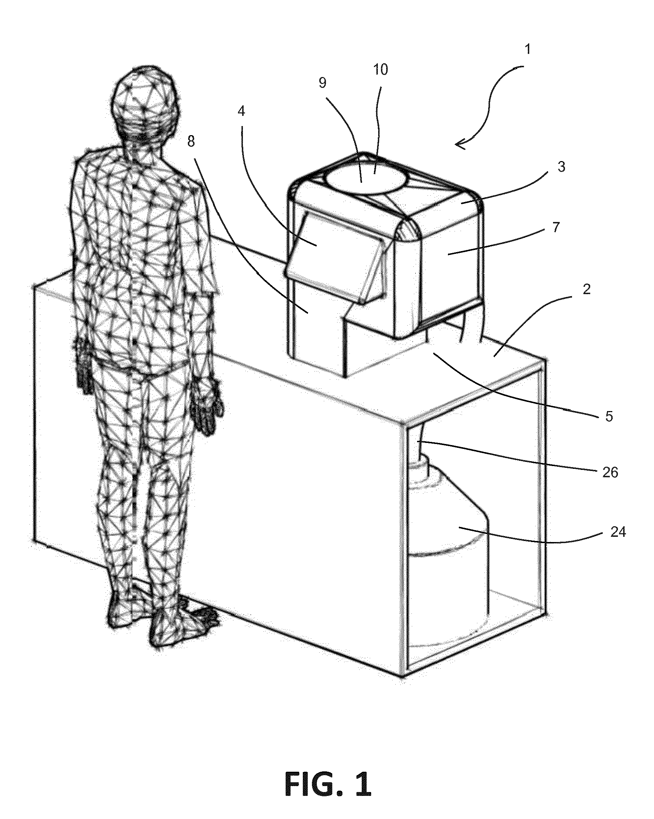

With reference to the appended drawings, an apparatus for making a frozen food is indicated with reference number 1. By way of example, frozen foods which can be made by the apparatus 1 according to the invention include: traditional ice-creams, soft ice-creams, soy-based ice creams, sherbets, frozen yogurts, milkshakes. According to the embodiment shown in Figure 1, apparatus 1 can be positioned on or fixed to a working counter 2. Apparatus 1 can include a main housing 3 at least partially enclosing parts of the apparatus itself. User-interface means 4, such as a touchscreen, can be provided in the apparatus 1, so to allow the user to select predefined programs (for example: predetermined programs for making a specific ice-cream, or a frozen yogurt or any different type of frozen food) or to set apparatus parameters or to see functional information of the apparatus 1. In the embodiment shown in the Figures, the main housing 3 is substantially L-shaped, turned upside-down, with an horizontal upper portion 7 and a vertical portion 8, and delimits a delivery space 5 where cups or glasses or the like can be positioned for the frozen food feeding. To this purpose, an apparatus outlet 6 can be provided in correspondence of the lower side of the main housing 3 upper portion 7.

The apparatus 1 comprises a mixing chamber 9 where one or more ingredients can be put to be mixed together. For some foods, in particular for ice-creams, incorporation of air with ingredients preferably takes place (this is commonly referred to as "overrun" in the field of ice-creams making). The mixing chamber 9 is preferably open in its upper part so to allow the user to put ingredients in the mixing chamber 9 easily. For example, the mixing chamber 9 can be positioned in the upper portion 7 of the apparatus 1, which to this purpose comprises an upper opening 10 to allow the insertion of ingredients into the mixing chamber 9.

Preferably, the apparatus 1 comprises means for mixing the ingredients together and with air, if necessary, in the mixing chamber 9. In particular, said mixing means can comprise a mixer 11 and a motor 12 for actuating said mixer. Motor 12 can be an electric motor and be connected to the mixer 11 so to put it in rotation in the mixing chamber 9 around a rotational axis A1. Mixer 11 can be of different shapes and designs. According to the embodiment shown in the Figures, mixer 11 comprises a body which envelops following a helix around the rotational axis A1, which is preferably vertically oriented. Advantageously, the helical body radius decreases along the rotational axis A1 from the bottom to the top of the mixing chamber 9. A lower blade 13 connects the motor shaft 14 to the helical mixer 11 and supports the latter. A mixing chamber outlet 15 for the exit of the ingredients mixture from the mixing chamber 9 is provided preferably in the bottom wall of the mixing chamber 9. The so configured mixing means allows an efficient mixing of the ingredients, which are usually introduced in a liquid state and leaves the mixing chamber through the mixing chamber outlet 15. In accordance with a possible embodiment, heating means, such as electrical resistances (not shown in the figures) can be provided in the mixing chamber 9 so to heat the ingredients mixture before freezing, as will be discussed later.

The apparatus 1 further comprises a frozen food forming chamber 16 where the mixture coming from the mixing chamber 9 is frozen through freezing means, as will be later described. The food forming chamber 16 is connected to the mixing chamber 9 for example by a duct 17 connecting the mixing chamber outlet 15 with a food forming chamber inlet 18. The food forming chamber inlet 18 is preferably positioned at a lower position than the mixing chamber outlet 15. The food forming chamber 16 is in turn connected to the above-mentioned apparatus outlet 6. Furthermore, the apparatus 1 comprises means for moving the mixture of ingredients in the frozen food forming chamber 16 along a path towards said apparatus outlet 6, which will be described in detail below.

According to a possible embodiment, the frozen food forming chamber 16 is configured to form a frozen food forming channel 19 through which the mixture of ingredients is forced to move by the above mentioned moving means. Preferably, the channel 19 ends at the apparatus outlet 6. Channel 19 is delimited by one or more channel walls, and preferably it comprises a wall 20 configured such that the channel 19 is cylindrical in shape. Still more preferably, the food forming chamber inlet 18 is located laterally on this wall 20.

The mixture moving means can be variously configured and arranged. Preferably, said means comprise one or more screws in rotation or in anti-rotation and a motor for actuating said one or more screws. In accordance with the embodiment shown in the Figures, the mixture moving means comprise a couple of screws 21', 21" actuated by a motor 22, preferably an electric motor. A transmission (not shown in the figure) can be arranged between the motor 22 and the screws 21', 21" such that the screw 21', 21" rotate in anti-rotation around rotational axes A2' and A2" which are parallel one to another and still more preferably parallel to the rotational axis A1 of the mixer 11 in the mixing chamber 9. Screws 21', 21" enters in the frozen food forming channel 19 through an upper opening 23 of the latter and preferably partially extends outside the frozen food forming channel 19 through a lower opening, opposite to the upper opening 23, which preferably corresponds to the apparatus outlet 6. Due to this configuration the ingredient mixture is forced to move in an annular space between the screws 21', 21" and the channel wall 20. Screws threads move the mixture in this annular channel and outside it through the apparatus outlet 6 for feeding the frozen food. Motor 22 is preferably located above the frozen food forming channel 19, in particular near the mixing chamber 9.

According to a possible embodiment, the screws 21', 21" are heated by suitable heating means, such as for example electrical resistances (not shown in the Figures).

In order to freeze the ingredients mixture when they move in the frozen food forming chamber 16, the apparatus 1 comprises a suitable freezing circuit.

The freezing circuit comprises a fluid reservoir 24 where e freezing fluid is stored. Preferably the freezing fluid is nitrogen which is stored in a liquid state in the fluid reservoir 24, which is a thermally insulating reservoir, for example a Dewar flask. Thermal insulating is necessary because liquid nitrogen at atmospheric pressure boils at -195.79 °C. Fluid reservoir 24 can be positioned for example under the working counter 2. A freezing chamber 25 is connected to the fluid reservoir 24 for example by a duct 26. A valve (not shown in the Figures) is advantageously associated to the duct 26 for regulating the flow of freezing fluid from the fluid reservoir 24 to the freezing chamber 25, as will be described later. A predetermined amount of freezing fluid is therefore collected into the freezing chamber 25 in order to freeze the ingredients mixture in the frozen food forming chamber 16. To this purpose, the freezing chamber 25 is in a heat exchange relationship with the frozen food forming chamber 16, but it is fluidically closed to the latter. In other words, the ingredients mixture in the frozen food forming chamber 16 can exchange heat with the freezing fluid in the freezing chamber 25, but the freezing fluid never enters in contact with the mixture ingredients, contrary to what happen in the apparatuses according to the prior art.

According to a preferred embodiment, the freezing chamber 25 comprises an annular shaped portion 27 delimiting an inner passage where the frozen food forming channel 19 is partially arranged. In this manner, the frozen food forming channel walls 20 internally delimits the freezing chamber 25 and the freezing fluid enters in contact with the frozen food forming channel walls 20 (directly, as shown in the Figures, or indirectly through intermediate walls not shown in the Figures), through which heat is exchanged between the ingredients mixture in the frozen food channel 19 and the freezing fluid in the freezing chamber 25. As a consequence, due to the very low temperature of the freezing fluid, the ingredients mixture freezes almost instantaneously whilst the freezing fluid, in particular the liquid nitrogen, at least partially evaporates. Considering that the ingredient mixture flows in the annular space between the frozen food forming channel walls 20 (which are in contact with the liquid nitrogen) and the screws 21' and 22", freezing of the mixture is rather uniform. Moreover, by properly selecting the rotational speed of the screws 21', 21", the time during which the ingredients mixture remains in contact with the cooled portion of the frozen food forming channel walls 20 can be precisely set, thereby avoiding that the ingredients freezes to the channel walls 20. Heating the screws 21', 21", as discussed above, further prevents such phenomenon.

As a consequence of the ingredients mixture freezing, the freezing fluid in the freezing chamber 25 at least partially evaporates. Thereafter the evaporated freezing fluid is preferably ejected outside the freezing chamber in a safe zone, possibly after a pre-heating such that the evaporated fluid temperature is not too low when the fluid is ejected. Nitrogen is a preferred freezing fluid because it is not toxic and can be injected into the atmosphere (which contains nitrogen) without any environmental problem.

After ejecting the evaporated freezing fluid, it is necessary to refill the freezing chamber 25 with a fresh freezing fluid from the reservoir 24. Therefore, the previously mentioned valve associated to the duct 26 is opened and kept open until the freezing chamber 25 is refilled. To this purpose, the apparatus 1 comprises a control unit (not shown in the Figures) which controls the opening/closing of the above mentioned valve as a function of the level of the freezing fluid in the liquid state in the freezing chamber 25. In order to monitor the liquid freezing fluid level, the freezing chamber 25 can be equipped with a temperature sensors system connected to the control unit. In particular, a first temperature sensor can be positioned in a lower portion of the freezing chamber 25 and a second temperature sensor can be positioned in an upper portion of the same. When the freezing fluid evaporates, in said lower portion (where an amount of liquid refrigerating fluid is still present) the temperature remains substantially constant, while in the upper part (where liquid refrigerating fluid is no longer present) temperature increases. Under these circumstances, the control unit opens the valve such that the lacking fluid is fed in the freezing chamber 20. Then, the valve is closed when temperature in the upper portion decreases to a predetermined value again.

It is to be noted that the control unit can regulate further parameters of the apparatus 1, such as rotational speeds of motors 12 and 22. The motors speeds, as well as the opening/closing time of the valve in the duct 26, depend on the type of food to be frozen and can be set manually or on the basis of predetermined programs by the user for example through the user-interface means 4.

The frozen food made by the apparatus according to the invention has uniform organoleptic properties comparable to the organoleptic properties of instant frozen foods obtained with a machine employing a direct contact of liquid nitrogen with ingredients mixture. Moreover, in the apparatus according to the invention, the amount of freezing fluid used for freezing the ingredients is strictly under control, and any unnecessary consumption of freezing fluid is avoided. Therefore, the apparatus 1 ensures a generally low consumption of the freezing fluid with a consequent overall low cost for making the frozen foods.

To the above-mentioned embodiments of the apparatus according to the invention, the skilled person, in order to meet specific current needs, can make several additions, modifications, or substitutions of elements with other operatively equivalent elements, without however departing from the scope of the appended claims.

## Claims

1. An apparatus (1) for making a frozen food, such as ice cream or the like, comprising:
- a mixing chamber (9) for mixing one or more ingredients together and/or with air;
- a frozen food forming chamber (16) connected to said mixing chamber (9) and to an apparatus outlet (6);
- means (21',21",22) for moving the mixture coming from the mixing chamber (9) along a path in the frozen food forming chamber (16) towards the apparatus outlet (6);
- a freezing circuit for freezing the mixture along said path in the frozen food forming chamber (16), said freezing circuit comprising a freezing fluid reservoir (24) for storing a freezing fluid and a freezing chamber (25) connected to said freezing fluid reservoir (24) suitable to collect a predetermined amount of the freezing fluid coming from the freezing fluid reservoir (24),
**characterized in that** said freezing chamber (25) is in a heat exchange relationship with and fluidically closed to the frozen food forming chamber (16), such that the freezing fluid in the freezing chamber (25) freezes the mixture in the frozen food forming chamber (16) without entering in contact with said mixture.

2. An apparatus (1) according to claim 1, wherein said freezing circuit is configured such that said freezing fluid is maintained in a liquid state in the freezing fluid reservoir (24) and evaporates in the freezing chamber (25) following the heat exchange with said mixture in the frozen food forming channel (16).

3. An apparatus (1) according to claim 1 or 2, wherein said freezing fluid is nitrogen.

4. An apparatus (1) according to claim any of the preceding claims, wherein said frozen food forming chamber (16) comprises a frozen food forming channel (19) delimited by one or more channel walls (20) at least partially housing said mixture moving means (21',21",22), said frozen food forming channel (19) and said mixture moving means (21',21",22) being configured such that said mixture is forced to move in an annular space between said one or more channel walls (20) and said mixture moving means (21',21",22).

5. An apparatus (1) according to claim 4, wherein said freezing chamber (25) comprises an annular shape portion delimiting an inner passage, said frozen food forming channel (19) being at least partially housed in said freezing chamber inner passage.

6. An apparatus (1) according to claim any of the preceding claims, wherein said mixture moving means comprises one or more screws (21',21") in rotation or in anti-rotation and a motor (22) for actuating said one or more screws.

7. An apparatus (1) according to claim 6, comprising means for heating said one or more screws (21',21").

8. An apparatus (1) according to any of the preceding claims, comprising a control system for controlling the amount of freezing fluid collected in the freezing chamber (25), said control system comprising a temperature sensors system for determining one or more temperatures of the freezing fluid in different positions of the freezing chamber (25) and a valve for regulating the feeding of the freezing fluid from the fluid reservoir (24) to the freezing chamber (25) depending on the one or more temperatures detected by said temperature sensors system.

9. An apparatus (1) according to any of the preceding claims, further comprising means (11,12) for mixing said ingredients together and/or with air in the mixing chamber (9).

10. An apparatus (1) according to claim 9, wherein said mixing means comprises a mixer (11) and a motor (12) for actuating said mixer, wherein said mixer (12) comprises an helix-shaped body having a radius decreasing in the axial direction (A1) of the mixing chamber (9) from the bottom to the top of the latter.

11. An apparatus (1) according to any of the preceding claims, wherein said mixing chamber (9) comprises heating means configured for heating said mixture in the mixing chamber (9) before it enters into the frozen food forming chamber (16).
